# EUROPEAN PATENT APPLICATION

(11) **EP 4 480 358 A1**
(43) Date of publication of application: **25.12.2024**
(21) Application number: 23802833.6
(22) Date of filing: 08.05.2023
(51) Int. Cl.: A47J 31/44, A47J 31/41, A47J 31/40, A47J 31/00

(54) **LIQUID MIXING DEVICE AND BEVERAGE MAKING MACHINE**

(30) Priority: 10.05.2022 CN 202210507213
(71) Applicant: Kalerm Technology (Suzhou) Co., Ltd, Suzhou Jiangsu 215134 (CN)
(72) Inventor: XU, Qiang, Suzhou, Jiangsu 215000 (CN); JIANG, Weifeng, Suzhou, Jiangsu 215000 (CN); GAO, Yunhua, Suzhou, Jiangsu 215000 (CN)
(74) Representative: Murgitroyd & Company
(86) International application number: PCT/CN2023/092654
(87) International publication number: WO 2023/217061

(57) **Abstract**

The present disclosure discloses a liquid mixing device and a beverage making machine. The liquid mixing device includes: a cup body provided with an accommodating cavity for holding liquid; a cup holder, the cup body being detachably supported on the cup holder; and a Venturi structure integrally formed with the cup holder and located on a side of the cup body, the Venturi structure including a mixing cavity, a liquid inlet channel connected to the mixing cavity, a steam channel for connecting a steam source and an outlet channel for outputting, the steam channel and the outlet channel being connected to the mixing cavity, the liquid inlet channel being connected to the accommodating cavity through a liquid conveying pipeline, and the liquid inlet channel being connected to the liquid conveying pipeline at an angle. The complete Venturi structure is integrated with the cup holder, so that a number of parts is reduced, thereby making mounting and disassembly more convenient, thus providing great convenience to users.

## Description

### CROSS-REFERENCE TO RELATED APPLICATIONS

This application claims priority to Chinese Patent Application No. 202210507213.8 filed on May 10, 2022 and entitled "liquid mixing device and beverage making machine", which is hereby incorporated by reference in its entirety.

### TECHNICAL FIELD

The present disclosure relates to the field of beverage making technologies, and in particular, to a liquid mixing device and a beverage making machine.

### BACKGROUND

Modern coffee making machines are often provided with a container for making foamed milk or hot milk. The container is typically provided with a foaming device adapted to connect to a steam conveying nozzle disposed on a beverage making machine. The foaming device includes a milk conveying pipe, an air pipe, a steam pipe and a mixing cavity, the air pipe and the steam pipe are both connected to the milk conveying pipe, the mixing cavity is also connected to the milk conveying pipe, and a milk outlet is disposed on a lower part of the mixing cavity. During use, steam enters the milk conveying pipe through the steam pipe, to drive milk to flow into the mixing cavity, so that a negative pressure is formed in the milk conveying pipe, micro amount air is sucked into the milk conveying pipe through an air inlet pipe with small-pipe-diameter and is mixed with the milk in the mixing cavity to form milk foam, and the milk foam finally flows out through the milk outlet on the lower part of the mixing cavity, which is used in making cappuccino.

At present, the existing full-automatic beverage making machine in the market basically contains a foaming device for making milk-coffee, the foaming device generally adopts a Venturi structure, and the Venturi structure is used to mix the sucked milk with steam, so as to obtain hot milk or milk foam. In order to facilitate conveying of milk, a connector is disposed on an inlet of the milk conveying pipe, a hose is connected to the connector, and when milk foam is made, the hose is inserted into the milk, and the hose automatically sucks the milk after the negative pressure is formed in the milk conveying pipe.

The container for accommodating the milk, the Venturi structure and the milk conveying pipe all need to be cleaned regularly, and since the foaming device with the Venturi structure is set to be detachably cleaned, but there are a large number of parts during mounting and disassembly, a plurality of smaller parts are quite difficult to clean, and mounting is quite tedious, which cannot provide convenience to users.

Therefore, further improvements are needed to the prior art.

### SUMMARY

The present disclosure provides a liquid mixing device that is convenient for cleaning and convenient to use for users.

The present disclosure further provides a beverage making machine that is convenient for cleaning and convenient to use for users.

For achieving the purposes above disclosed, the present disclosure provides a liquid mixing device, including: a cup body provided with an accommodating cavity for holding liquid; a cup holder, the cup body being detachably supported on the cup holder; and a Venturi structure integrally formed with the cup holder and located on a side of the cup body, the Venturi structure including a mixing cavity, a liquid inlet channel connected to the mixing cavity, a steam channel for connecting a steam source and an outlet channel for outputting, the steam channel and the outlet channel being connected to the mixing cavity, the liquid inlet channel being connected to the accommodating cavity through a liquid conveying pipeline, and the liquid inlet channel being connected to the liquid conveying pipeline at an angle.

As a further improvement of an embodiment of the present disclosure, the liquid inlet channel is inserted into the liquid conveying pipeline along a horizontal direction, and the steam channel and the outlet channel are disposed along the horizontal direction and are perpendicular to an extending direction of the liquid inlet channel.

As a further improvement of an embodiment of the present disclosure, the liquid inlet channel is provided with a liquid inlet facing a side where the cup holder is located, the liquid inlet is connected to the liquid conveying pipeline, an opening channel extending along a vertical direction is disposed on an outer side of the cup body, the cup holder is provided with a sealing strip extending along the vertical direction, and the liquid conveying pipeline is formed by sealing the sealing strip to the opening channel.As a further improvement of an embodiment of the present disclosure, the cup holder includes a back plate, the sealing strip is connected to the back plate, the back plate is provided with a first opening portion and a second opening portion on an upper end, the first opening portion and the second opening portion are spaced along a horizontal direction, the steam channel and the outlet channel correspond to a position of the first opening portion and a position of the second opening portion, respectively, positions of the mixing cavity and the liquid inlet channel are located between the first opening portion and the second opening portion, a groove enclosing an opening end of the liquid inlet channel is disposed between the first opening portion and the second opening portion, and the groove is filled with the sealing strip.

As a further improvement of an embodiment of the present disclosure, an air groove is further included, the air groove is connected to the liquid inlet channel, and the air groove is disposed on the opening channel or the sealing strip.

As a further improvement of an embodiment of the present disclosure, the liquid inlet channel is provided with a liquid inlet facing a side where the cup holder is located, the liquid inlet is connected to the liquid conveying pipeline, the liquid conveying pipeline is constructed as a hose, and the hose extends into the accommodating cavity from a side of the cup body.

As a further improvement of an embodiment of the present disclosure, the accommodating cavity is provided with an opening on an upper part, the liquid mixing device further includes a cup cover movably covered the opening, a housing cavity is disposed on a side of the cup holder, a part of the cup body is located in the housing cavity, the housing cavity is enclosed by a top wall, a bottom wall and two side walls connecting the top wall and the bottom wall, and the cup cover is joined to the top wall, so as to jointly seal the opening.As a further improvement of an embodiment of the present disclosure, a steam connector is further included, the steam connector is capable of connecting to the steam channel, and a position, relative to the steam channel, of the steam connector is selectively locked along an axial direction of the steam channel.

As a further improvement of an embodiment of the present disclosure, the steam connector includes a steam nozzle and a connector pipe that are detachably connected, the steam nozzle is located inside the steam channel, a part of the connector pipe is located inside the steam channel and is connected to the steam nozzle, and another part of the connector pipe is located outside the steam channel and is used for connecting to the steam source.

As a further improvement of an embodiment of the present disclosure, a discharging pipe is further included, the discharging pipe is connected to the outlet channel and is capable of rotating within a preset range around an axis of the outlet channel, and a sealing member is connected between the discharging pipe and the outlet channel.

As a further improvement of an embodiment of the present disclosure, a bubble breaker is disposed in the discharging pipe, and the bubble breaker is located on a flow path from the sealing member to the discharging pipe.

As a further improvement of an embodiment of the present disclosure, the bubble breaker and the discharging pipe are integrally formed, and the discharging pipe is connected to the outlet channel through the sealing member.

As a further improvement of an embodiment of the present disclosure, an end cover is further included, the cup body is supported on a side of the cup holder, the Venturi structure is disposed on another side of the cup holder, the cup body is provided with an enclosure wall enclosing the Venturi structure, the end cover covers the enclosure wall, and the sealing member is limited between the enclosure wall and the end cover.

As a further improvement of an embodiment of the present disclosure, the cup holder is provided with a first limiting portion and a second limiting portion that are spaced along an up-down direction, an upper portion and a lower portion of the cup body cooperate with the first limiting portion and the second limiting portion, respectively, the first limiting portion and the second limiting portion are configured to limit the cup body to separating from the cup holder along a first direction, and a position, relative to the cup body, of the second limiting portion changes under an external force, so as to allow the cup body to separate from the cup holder.

As a further improvement of an embodiment of the present disclosure, a housing cavity is disposed on a side of the cup holder, a part of the cup body is located in the housing cavity, the housing cavity is enclosed by a top wall, a bottom wall and two side walls connecting the top wall and the bottom wall, the first limiting portion includes a limiting rib protruding downwards from a middle of the top wall, a protruding edge extending upwards is disposed on a side wall of the cup body, and the protruding edge is clamped to a side of the limiting rib.

As a further improvement of an embodiment of the present disclosure, a housing cavity is disposed on a side of the cup holder, a part of the cup body is located in the housing cavity, the housing cavity is enclosed by a top wall, a bottom wall and two side walls connecting the top wall and the bottom wall, and the second limiting portion extends from the bottom wall towards a side where the cup body is located; the second limiting portion includes a supporting plate extending from a middle of the bottom wall to a side where the cup body is located, the supporting plate is provided with a slot, the cup body is provided with a clamping block at a bottom, and the clamping block is inserted into the slot; or the second limiting portion includes a supporting plate extending from a middle of the bottom wall to a side where the cup body is located, a position clamping block extending upwards is disposed on an end of the supporting plate, a recess is disposed at a bottom of a side wall of the cup body, and the position clamping block is stuck in the recess.

As a further improvement of an embodiment of the present disclosure, the cup body protrudes at a bottom to form a first boss and a second boss that are spaced apart, and the supporting plate is clamped between the first boss and the second boss; and positions where the first limiting portion and the second limiting portion cooperate with the cup body are spaced along a first direction.

As a further improvement of an embodiment of the present disclosure, a discharging pipe is further included, the discharging pipe is connected to the outlet channel, the cup body is provided with a connecting opening at a position corresponding to the outlet channel, a part of the discharging pipe extends into an inner side of the connecting opening, a first protrusion extending along a circumferential direction is disposed on an outer side of the discharging pipe, and the first protrusion is clamped to the inner side of the connecting opening; and the connecting opening is provided with a second protrusion on the inner side, a protruding portion is disposed on an end, along the circumferential direction, of the first protrusion, and when the discharging pipe rotates around an axis of the outlet channel to a preset angle, the protruding portion abuts against the second protrusion.

The present disclosure further provides a beverage making machine including the liquid mixing device according to any one of the above embodiments, the beverage making machine includes a front panel connected to an outlet assembly, and the liquid mixing device is detachably connected to the front panel and is located on a side of the outlet assembly.

As a further improvement of an embodiment of the present disclosure, a connector seat and a micro switch are further included, the connector seat is connected to a back side of the front panel, the micro switch is mounted on the connector seat, the connector seat is provided with a concave cavity whose shape matches with a shape of the steam connector and a socket corresponding to the micro switch, the liquid mixing device includes a trigger column disposed adjacent to the steam connector, and the steam connector and the trigger column are inserted into the concave cavity and the socket, respectively.

As a further improvement of an embodiment of the present disclosure, a flip cover is connected to the connector seat by means of a pivoting connection, and the flip cover is kept at a position covered the concave cavity and the socket under its own gravity.

Compared with the prior art, the beneficial effects of the present disclosure are that: the complete Venturi structure is integrated with the cup holder, so that a number of parts is reduced, which not only solves a problem in that a traditional liquid mixing device is not easily cleaned and ensures quality of the made milk foam, thereby meeting requirements of people for pursuing delicate mouthfeel and improving taste, but also makes mounting and disassembly more convenient, thereby providing great convenience to users.

### BRIEF DESCRIPTION OF THE DRAWINGS

FIG. 1 is a schematic stereoscopic diagram of a liquid mixing device according to an embodiment of the present disclosure, where a cup cover is in an opening state.
FIG. 2 is a top view of the liquid mixing device in FIG. 1.
FIG. 3 is a schematic cross-sectional diagram taken along the line A-A in FIG. 2.
FIG. 4 is a schematic enlarged diagram of the part a of the liquid mixing device in FIG. 3.
FIG. 5 is a schematic cross-sectional diagram taken along the line B-B in FIG. 2.
FIG. 6 is a schematic exploded diagram of the liquid mixing device in FIG. 1.
FIG. 7 is a schematic stereoscopic diagram of a cup body of the liquid mixing device in FIG. 6.
FIG. 8 is a schematic exploded diagram of the liquid mixing device in FIG. 1 from another perspective.
FIG. 9 is a schematic stereoscopic diagram of a cup holder of the liquid mixing device in FIG. 8.
FIG. 10 is a schematic stereoscopic diagram of a cup holder of the liquid mixing device in FIG. 9 with a sealing strip removed.
FIG. 11 is a schematic stereoscopic diagram of a discharging pipe of the liquid mixing device in FIG. 8.
FIG. 12 is a schematic stereoscopic diagram of a liquid mixing device according to another embodiment of the present disclosure, where a cup cover is in an opening state.
FIG. 13 is a schematic cross-sectional diagram of the liquid mixing device in FIG. 12.
FIG. 14 is a schematic stereoscopic diagram of a cup body of the liquid mixing device in FIG. 12.
FIG. 15 is a schematic cross-sectional diagram taken along the line C-C in FIG. 13.
FIG. 16 is a schematic exploded diagram of the liquid mixing device in FIG. 12.
FIG. 17 is a schematic diagram of another structural form of a liquid mixing device provided with an air channel of the present disclosure.
FIG. 18 is a schematic diagram of a liquid mixing device according to still another embodiment of the present disclosure.
FIG. 19 is a schematic cross-sectional diagram taken along the line D-D in FIG. 18.
FIG. 20 is a schematic cross-sectional diagram of a mixing device according to yet still another embodiment of the present disclosure.
FIG. 21 is a schematic cross-sectional diagram taken along the line E-E in FIG. 20.
FIG. 22 is a schematic diagram of a beverage making machine according to an embodiment of the present disclosure.
FIG. 23 is a schematic stereoscopic diagram of a front panel of the beverage making machine in FIG. 22.
FIG. 24 is a schematic cross-sectional diagram of a front panel of the beverage making machine in FIG. 22.

### DETAILED DESCRIPTIONS OF THE EMBODIMENTS

The present disclosure may be described in detail below with reference to specific embodiments shown in the accompanying drawings. However, the present disclosure is not limited by these embodiments, and changes in structure, method, or function made by a person of ordinary skill in the art according to these embodiments are all included within the protection scope of the present disclosure.

It should be understood that terms used herein and representing spatial relative positions, such as "up", "above", "down" or "below", are used to easily explain purposes to describe a relationship between one unit or feature and another unit or feature shown in the accompanying drawings. The terms representing the spatial relative positions may be intended to include different orientations of a device during use or operation in addition to the orientations shown in the accompanying drawings.

A liquid mixing device in the embodiments of the present disclosure may be applied to a beverage making machine such as a coffee machine or a tea drink machine, and a liquid mixing device 100 used in a coffee machine is taken as an example for description below. It should be understood that the liquid mixing device 100 in the embodiments of the present disclosure may also be used separately or applied to other beverage making machines.

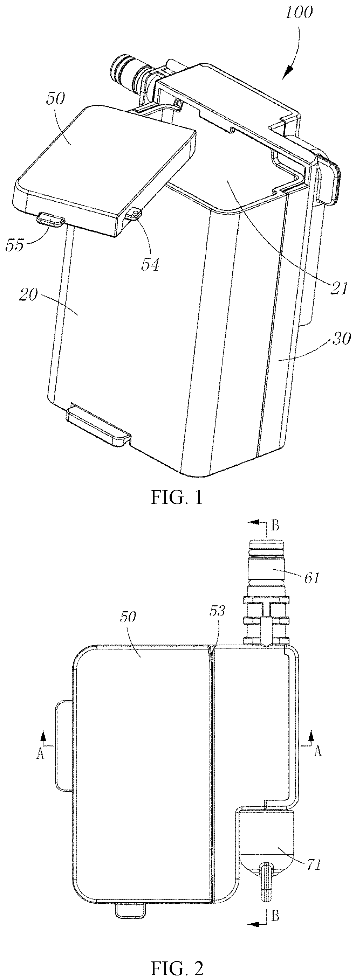

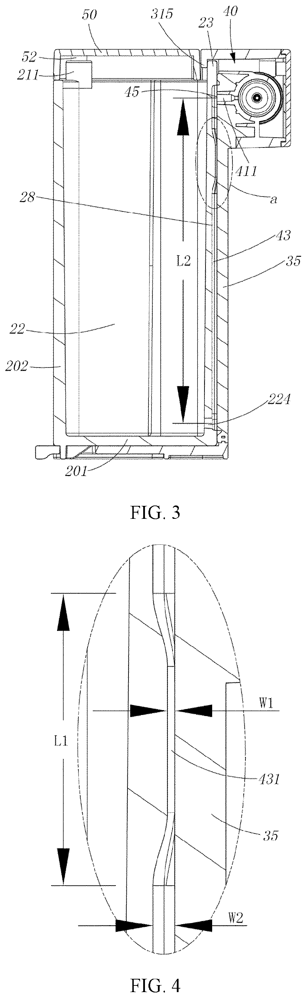

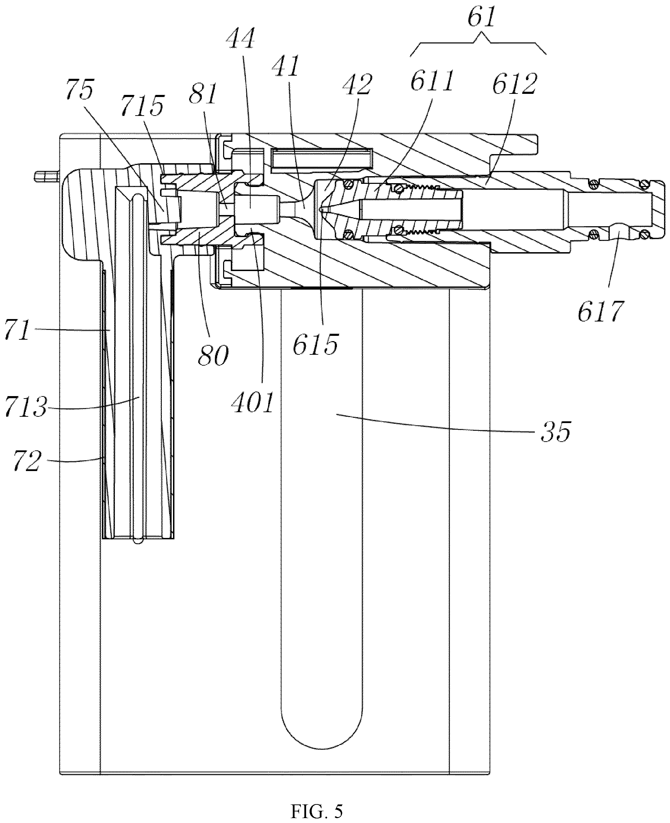

Referring to FIG. 1 to FIG. 5, in this embodiment, the liquid mixing device 100 includes a cup body 20. The cup body 20 is provided with an accommodating cavity 22 for holding liquid, and milk or other liquid to be mixed may be stored in the accommodating cavity 22 for being mixed. The liquid mixing device 100 further includes a cup holder 30 detachably connected to the cup body 20, the cup holder 30 may be configured to assist in supporting the cup body 20, so as to facilitate detachable mounting of the mixing device 100 on a beverage making machine.

The liquid mixing device 100 further includes a Venturi structure 40, and the Venturi structure 40 is integrally formed with the cup holder 30 and is located on a side of the cup body 20, so that the Venturi structure 40 may be separably disposed on the side of the cup body 20. The side herein may be an upper side of the cup body 20, a front side, a back side, a left side or a right side of the cup body 20, and the Venturi structure 40 is an independent and complete structure with respect to a liquid conveying pipeline 43. In this embodiment, the Venturi structure 40 includes a mixing cavity 41, a liquid inlet channel 411 connected to the mixing cavity 41, a steam channel 42 for connecting a steam source and an outlet channel 44 for outputting, the steam channel 42 and the outlet channel 44 are connected to the mixing cavity 41, and the liquid inlet channel 411 is connected to the accommodating cavity 22 through the liquid conveying pipeline 43. In other words, the mixing cavity 41 is connected to the accommodating cavity 22 through the liquid inlet channel 411 and the liquid conveying pipeline 43, and liquid in the accommodating cavity 22 may enter the mixing cavity 41 through the liquid conveying pipeline 43 and the liquid inlet channel 411. The independent and complete Venturi structure may be understood as a structure formed by seamlessly joining the mixing cavity 41, the steam channel 42 connected to the mixing cavity 41, the liquid inlet channel 411 and the outlet channel 44, which may ensure a mixing effect, so as to output milk foam meeting requirements of users. Further, the liquid mixing device 100 further includes a sealing strip 35 connected to the cup body 20, the cup body 20 includes a cup bottom 201 and a cup wall 202, the cup bottom 201 and the cup wall 202 form the accommodating cavity 22 for holding liquid, milk or other liquid to be mixed may be stored in the accommodating cavity 22 for being mixed, and the sealing strip 35 is detachably joined to the cup wall 202 along a vertical direction, so as to form the liquid conveying pipeline 43 between the cup wall 202 and the sealing strip 35. The junction between the sealing strip 35 and the cup wall 202 may be a sealing connection between the sealing strip 35 and a part of the cup wall 202, and the liquid conveying pipeline 43 is formed by two opening parts, and the two opening parts are separated during disassembly, which can achieve a deep cleaning.

In this embodiment, the cup wall 202 is provided with an opening channel 28 on an outer side, the opening channel 28 extends along the vertical direction, a bottom of the opening channel 28 is connected to the accommodating cavity 22, the sealing strip 35 is disposed on the cup holder 30 and extends along the vertical direction, the sealing strip 35 is joined to an opening part of the opening channel 28 by means of a sealed manner, so as to form the liquid conveying pipeline 43, and the liquid inlet channel 411 is inserted into the liquid conveying pipeline 43 from a side of the sealing strip 35. The liquid inlet channel 411 is provided with a liquid inlet 45 facing a side where the cup holder 30 is located, the liquid inlet 45 is connected to the liquid conveying pipeline 43, and the opening channel 28 is disposed on the outer side of the cup wall 202, so that a cleaning is more convenient, and a connection between the opening channel 28 and the sealing strip 35 is more easily operated. In particular, the liquid inlet channel 411 is inserted into the liquid conveying pipeline 43 along a horizontal direction, and the steam channel 42 and the outlet channel 44 are disposed along the horizontal direction and are perpendicular to an extending direction of the liquid inlet channel 411.

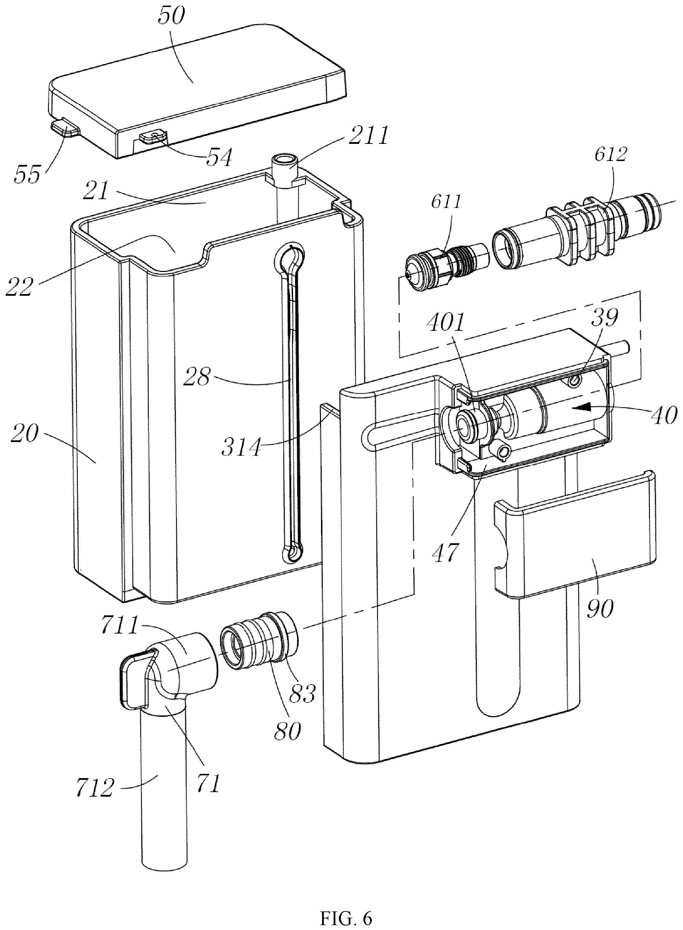

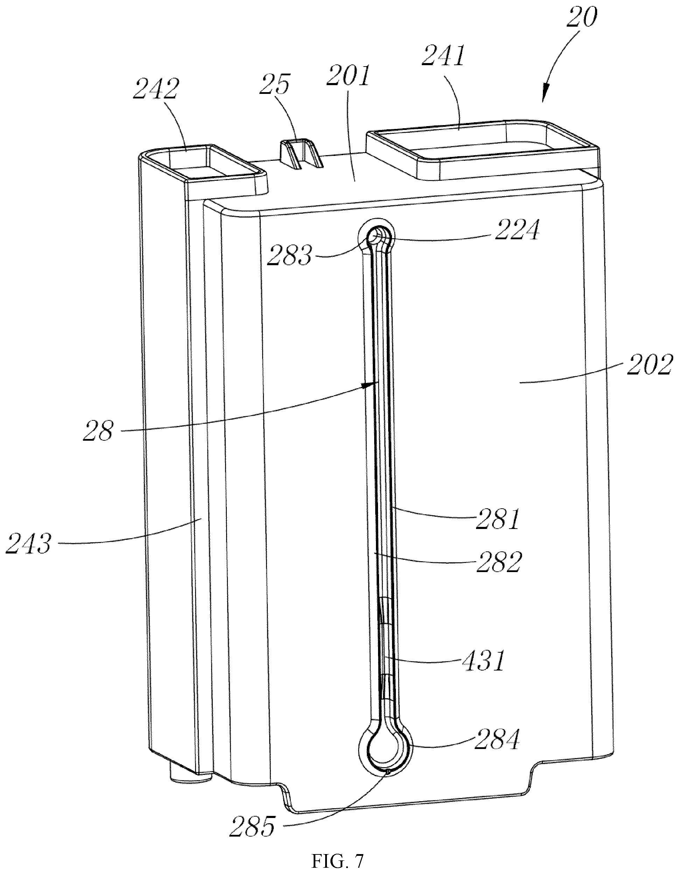

Referring to FIG.6 and FIG. 7, the opening channel 28 is provided with a through hole 224 at a bottom, the through hole 224 is connected to the accommodating cavity 22, and liquid in the accommodating cavity 22 may enter the liquid conveying pipeline 43 through the through hole 224. The opening channel 28 includes a first convex rib 281 and a second convex rib 282 that are extending along a vertical direction, the first convex rib 281 and the second convex rib 282 are substantially parallel and spaced apart, an end of the first convex rib 281 and an end of the second convex rib 282 are connected to a first convex rib ring 283 by means of a closed manner, another end of the first convex rib 281 and another end of the second convex rib 282 are connected to a second convex rib ring 284 by means of a closed manner, and the through hole 224 is located in the first convex rib ring 283. The liquid inlet channel 411 has a liquid inlet 45 facing a side where the cup body 20 is located, the liquid inlet 45 is located within a range limited by the second convex rib ring 284, and the liquid conveying pipeline 43 connected to the accommodating cavity 22 and the liquid inlet channel 411 is formed by sealing the sealing ring 35, i.e., conveying milk is achieved without a milk pipe. In addition, on the second convex rib ring 284, an air groove 285 is disposed on a position whose height is higher than that of the liquid inlet 45 of the liquid inlet channel 411, the air groove 285 is connected to an inside and an outside of the second convex rib ring 284, and the air groove 285 is preferably disposed on a topmost position on the second convex rib ring 284, so that air may enter the mixing cavity 41 together with liquid, and the mixing cavity 41 is connected to a steam output pipeline inside a beverage making machine through the steam channel 42, so that after the liquid and one of steam or air are mixed in the mixing cavity 41, hot milk or milk foam is formed, and then is discharged through the outlet channel 44.

In order to better control a velocity of flow and a volume of flow of liquid entering the mixing cavity 41, the liquid conveying pipeline 43 includes a narrow channel portion 431, along a direction that the sealing strip 35 is joined to the cup wall 202, a width W1 of the narrow channel portion 431 ranges from one-fourth to one-second of a width W2 of other portions; and a length L1 of the narrow channel portion ranges from one-fifteenth to one-sixth of a length L2 of the liquid conveying pipeline, or a distance from the narrow channel portion 431 to an outlet end of the liquid conveying pipeline 43 ranges from one-twelfth to one-third of a distance from the narrow channel portion 431 to an inlet end of the liquid conveying pipeline 43. The narrow channel portion 431 may be transitioned to the other portions through an inclined surface or an arc surface. The narrow channel portion 431 may be formed by protruding a portion of the opening channel 28 relative to other portions of the opening channel 28, or may also be formed by protruding a portion of the sealing strip relative to other portions of the sealing strip.

Further, the sealing strip 35 is fixed on the cup holder 30, the Venturi structure 40 is connected to the cup holder 30, for example, the Venturi structure 40 is detachably connected to the cup holder 30. The cup holder 30 is connected to the sealing strip 35 and the Venturi structure 40, so that an integral structure may be more compact and more reliable. In this embodiment, in particular, the cup body 20 is supported on a side of the cup holder 30, the Venturi structure 40 and is integrally formed with the cup holder 30 and protrudes towards a side away from the cup body 20, and the liquid inlet channel 411 is connected to the liquid conveying pipeline 43 at an angle. In this embodiment, the liquid inlet channel 411 is preferably disposed along a horizontal direction, but of course the liquid inlet channel 411 may also be inclined upwards or downwards at a preset angle. The liquid inlet channel 411 is connected to the liquid conveying pipeline 43 at an angle, and since the liquid conveying pipeline 43 is disposed along a vertical direction, the liquid inlet channel 411 is disposed at an angle with the liquid conveying pipeline 43, so that a space above the cup body 20 may be less or not occupied, thereby leaving enough milk filling space for the cup body 20. Moreover, the Venturi structure 40 and the cup holder 30 are integrally formed, so that a number of parts during disassembly is reduced, so as to reduce an assembly tolerance, and cleaning the Venturi structure 40 is achieved by holding the cup holder 30, thus providing convenience to users.

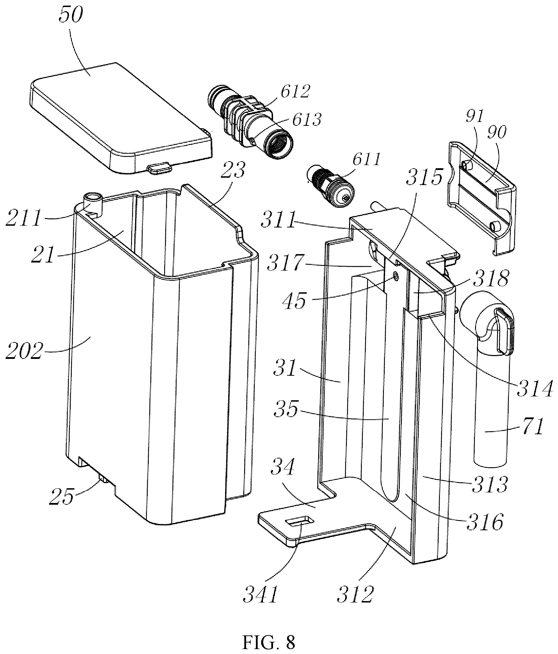

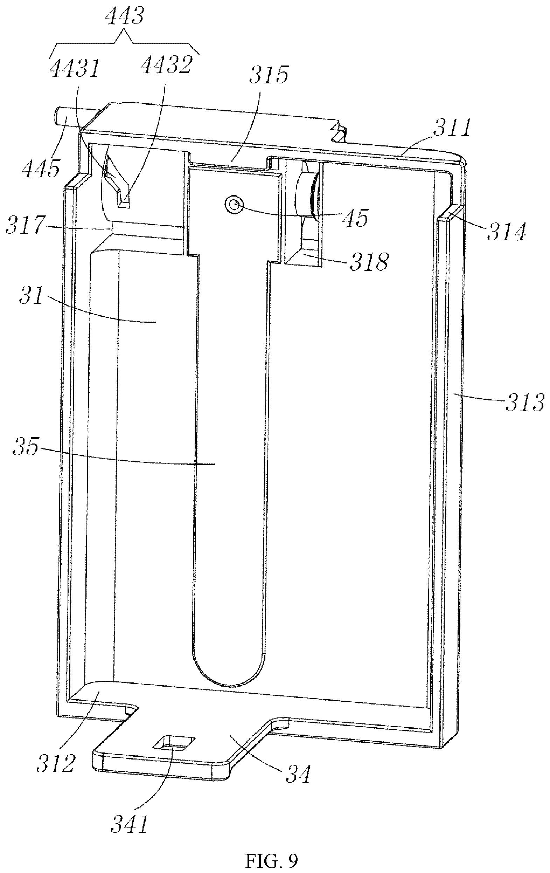

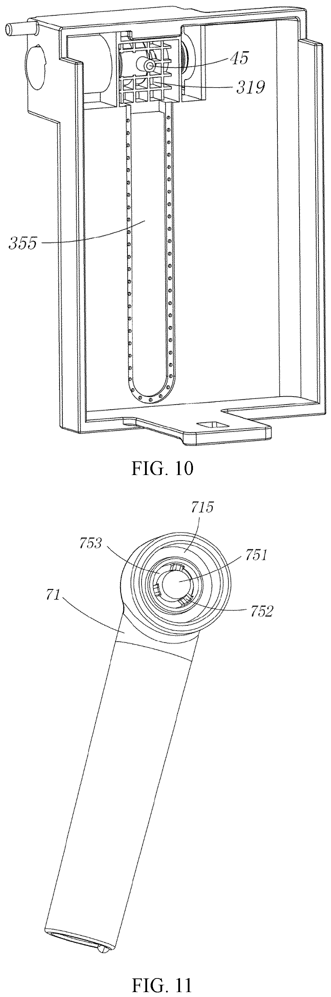

Combined with FIG. 8 to FIG. 10, the sealing strip 35 extends to cover an outer periphery of the liquid inlet 45, which forms the liquid conveying pipeline 43 while sealing the liquid inlet 45, so that conveying of liquid is more reliable. Specifically, the cup holder 30 further includes a back plate 316, the sealing strip 35 is connected to the back plate 316, the back plate 316 is provided with a first opening portion 317 and a second opening portion 318 on an upper end, the first opening portion 317 and the second opening portion 318 are spaced along a horizontal direction, the steam channel 42 and the outlet channel 44 correspond to a position of the first opening portion 317 and a position of the second opening portion 318, respectively, positions of the mixing cavity 41 and the liquid inlet channel 411 are located between the first opening portion 317 and the second opening portion 318, a groove 319 enclosing the liquid inlet channel 411 is disposed between the first opening portion 317 and the second opening portion 318, and the groove 319 is filled with the sealing strip 35. In particular, a plastic-stealing process may be used in a process of forming the groove 319, specifically, as shown in FIG. 10, a plurality of grid structures are disposed inside the groove 319. A part of the sealing strip 35 is embedded into the groove 319, so that a junction between the sealing strip 35 and the cup holder 30 is tighter and more reliable, thereby ensuring reliability of the sealing between the liquid conveying pipeline 43 and the liquid inlet channel 411. The sealing member 35 may be disposed on the cup holder 30 by bilateral injection molding, or may be a separate sealing member 35 capable of removing from an opening groove 355 having a matching shape on the cup holder 30.

Continually referring to FIG. 7 to FIG. 9, the cup holder 30 is provided with a first limiting portion and a second limiting portion that are spaced along an up-down direction, and an upper portion and a lower portion of the cup body 20 cooperate with the first limiting portion and the second limiting portion, respectively. The first limiting portion and the second limiting portion are configured to limit the cup body 20 to separating from the cup holder 30 along a first direction, and the first direction is a direction that the sealing strip 35 is joined to the cup body 20; and a position, relative to the cup body, of the second limiting portion changes under an external force, so as to allow the cup body 20 to separate from the cup holder 30. In other words, in a natural state that the second limiting portion is kept in cooperation with the cup body 20, the second limiting portion limits the cup body 20; and when the second limiting portion has been displaced under the external force, the lower portion of the cup body 20 may firstly be disengaged from the second limiting portion, so as to provide a yielding space for the upper portion being disengaged from the first limiting portion, thereby achieving disengagement between the upper portion and the first limiting portion, thus finally separating the cup body 20 from the cup holder 30. The supporting of the cup body 20 on the cup holder 30 is limited by the two limiting portions at both upper and lower sides, so that a connection between the cup body 20 and the cup holder 30 is more reliable, and the position, relative to the cup body 20, of the second limiting portion changes under the external force, so that the cup body 20 may be released from the cup holder 30, thereby making disassembly and cleaning very convenient and providing a good user experience, while ensuring reliability of the sealing of the liquid conveying pipeline.

Specifically, a housing cavity 31 is disposed on a side of the cup holder 30, a part of the cup body 20 is located in the housing cavity 31, and the housing cavity 31 is enclosed by a top wall 311, a bottom wall 312, and two side walls 313 connecting the top wall 311 and the bottom wall 312. The first limiting portion extends downwards from the top wall 311, and the second limiting portion extends from the bottom wall 312 towards a side where the cup body 20 is located, so that when the cup body 20 is mounted on the cup holder 30, only the upper portion of the cup body 20 needs to be clamped to a side of the first limiting portion, and then a bottom of the cup body 20 cooperates with the second limiting portion, thereby making it convenient and quick to mount; and during disassembly, only a free end of the second limiting portion needs to be operated, i.e., the position, relative to the cup body, of the second limiting portion changes under the external force, thereby allowing the cup body to separate from the cup holder.

A direction from a side wall of the cup holder 30 to another side wall of the cup holder 30 is a front-back direction, and a direction perpendicular to the front-back direction and a vertical direction is a left-right direction, or a width direction, i.e., the first direction above mentioned. In this embodiment, the cup body 20 is preferably mounted on the cup holder 30 along the left-right direction, i.e., the cup body 20 is inserted into the housing cavity 31 along the width direction of the cup body 20, or the cup body 20 is taken out from the housing cavity 31 along the width direction of the cup body 20 to be separated from the cup holder 30. The first limiting portion includes a limiting rib 315 protruding downwards from a middle of the top wall 311, a protruding edge 23 extending upwards is disposed on a side wall, close to the cup holder 30, of the cup body 20, and the protruding edge 23 is clamped to a side of the limiting rib 315, thereby achieving the limiting of the first limiting portion to the upper portion of the cup body. The second limiting portion includes a supporting plate 34 extending from a middle of the bottom wall 312 to a side where the cup body 20 is located, the supporting plate 34 is provided with a slot 341, the cup body 20 is provided with a clamping block 25 at a bottom, and the clamping block 25 is inserted into the slot 341, thereby achieving the limiting of the second limiting portion to the lower portion of the cup body. The supporting plate 34 is a cantilever relative to the cup holder 30, a free end of the cantilever may deform when subjected to the external force, and therefore, a position, relative to the cup body 20, of the cantilever changes, so that the clamping block 25 is easily disengaged from the slot 341 and the cup body 20 is no longer limited, and after the external force is released, the supporting plate 34 may reset itself.

Dual limiting at both upper and lower sides is adopted, so that the cup holder 30 limits the cup body 20 along the left-right direction of the cup body 20, and the two side walls of the cup holder 30 limit the cup body 20 along the front-back direction, so as to more reliably support the cup body 20 on the cup holder 30, and the separation of the cup body 20 and the cup holder 30 may be achieved only by operating the second limiting portion, thereby making the mounting and disassembly between the cup body 20 and the cup holder 30 very convenient. An edge of the supporting plate 34 exceeds an outer contour of the cup body 20, so that the supporting plate 34 may be conveniently operated to disengage the clamping block 25 from the slot 341 through elastic deformation of the supporting plate 34, so as to separate the cup body 20 from the cup holder 30. A direction of an applied force to operate the supporting plate 34 to deform is at an angle to the left-right direction, the edge of the supporting plate is preferably applied to a force along a downward direction, and after the clamping block 25 is disengaged from the slot 341, the protruding edge 23 may also be separated from the limiting rib 315, so that no misoperation occurs.

Certainly, the second limiting portion may also adopt another structure, such as a limiting element pressed by an elastic element, and a position of the limiting element changes when an external force overcomes an elastic force of the elastic element, so as to disengage the limiting element from the lower portion of the cup body 20. In the embodiment of the present disclosure, a position change of the second limiting portion may be that a position of the second limiting portion changes based on its material characteristics and under the external force, and the second limiting portion resets after the external force is removed, or may also be that a position of the second limiting portion changes based on its structural characteristics and under the external force, and the second limiting portion resets after the external force is removed.

In addition, the protruding edge 23 that cooperates with the first limiting portion is located on a side wall, close to the cup holder 30, of the cup body 20, i.e., a right side wall, the clamping block 25 that cooperates with the second limiting portion is located at a bottom of the cup body 20, and the clamping block 25 is preferably disposed on a position close to a left side wall of the cup body 20, so that positions where the first limiting portion and the second limiting portion cooperate with the cup body 20 are spaced along the width direction of the cup body, so as to further enhance stability of the supporting of the cup body 20 on the cup holder 30.

In this embodiment, the first limiting portion and the second limiting portion are symmetrical with respect to a center line of the liquid conveying pipeline, respectively, and the center line of the liquid conveying pipeline is offset towards a side relative to a center line of the cup body, so that a junction between the cup holder 30 and the Venturi structure 40 may be more compact, and along a direction perpendicular to an extending direction of the sealing strip 35, both a width of the first limiting portion and a width of the second limiting portion are greater than a width of the sealing strip 35, so that disposal of the first limiting portion and the second limiting portion spaced along the up-down direction may also further ensure reliability of the sealing of the sealing strip 35 to the opening channel 28, so as to avoid leakage of the liquid conveying pipeline 43, and the sealing member and the opening channel may also be cleaned more easily after the cup body is separated from the cup holder.

Further, the cup body 20 protrudes at a bottom to form a first boss 241 and a second boss 242 that are spaced apart, and the supporting plate 34 is clamped between the first boss 241 and the second boss 242, so as to further limit the supporting of the cup body 20 on the cup holder 30, and a part of the cup body 20 may also be supported on the supporting plate 34, so that the supporting of the cup body 20 on the cup holder 30 is more stable. The first boss 241 and the second boss 242 are two square rings that are enclosed on all sides and are located at the bottom of the cup body, two sides of the first boss 241 are flush with an outer contour of the cup body, two sides of the second boss 242 are flush with an outer contour of the cup body, a side, corresponding to the two bosses, of the cup body 20 has step surfaces 243, and the two side walls 313 of the cup holder 30 just abut against the step surfaces 243, so that an outer contour of the cup holder 30 is flush with an outer contour of the cup body 20, thereby improving aesthetics of appearance and making the positioning of the cup holder 30 and the cup body 20 more accurate.

With continued reference to FIG. 1 to FIG. 6, the accommodating cavity 22 is provided with an opening 21 on an upper part, and milk or other liquid may be loaded into the accommodating cavity through the opening 21. The mixing device 100 further includes a cup cover 50 covered the opening 21, and the cup cover 50 is connected to the cup body 20 by means of a pivoting connection, so as to operably open or close at least a part of the opening 21, so that the cup cover 50 may be opened at any time to add liquid during a beverage making process, and even if there is remaining liquid, the whole mixing device 100 may be taken down from a coffee machine and placed into a refrigerator for storage, thereby prolonging storage time of the liquid, thus avoiding waste.

The cup cover 50 is supported on an edge of the opening 21 and rotates relative to the cup body 20 around a pivotal shaft 211 disposed along the vertical direction. In other words, the cup cover 50 rotates along a horizontal direction, thereby making it easier to add liquid. Certainly, the cup cover may also be disposed to flip upwards around a pivotal shaft disposed along a horizontal direction, or the cup cover moves to open the opening, or the closing of the opening may also be achieved by connecting an edge of the cup cover to the opening by means of an insertion connection.

In this embodiment, a vertical direction in which the liquid mixing device 100 is mounted on a beverage making machine or independently supported on a desktop is an up-down direction, and a direction perpendicular to the vertical direction is a horizontal direction. In order to facilitate the rotation of the cup cover 50, the cup cover 50 is joined to a side of the cup holder 30, and an end of the side forms an avoidance arc surface 53 or an avoidance inclined surface, so as to prevent interference between the cup holder 30 and the cup cover 50 when the cup cover 50 rotates.

Further, the cup cover 50 is joined to the top wall 311, so as to jointly close the opening 21, so that the supporting of the cup body 20 is more stable, and the top wall 311 of the cup holder 30 can provide a limiting for rotation of the cup cover 50, so as to make the cup cover 50 open and close the opening 21 more reliable. A direction from a side wall of the cup holder 30 to another side wall of the cup holder 30 is a front-back direction, and a direction perpendicular to the front-back direction and a vertical direction is a left-right direction, or a width direction. In this embodiment, the cup body 20 is preferably mounted on the cup holder 30 along the left-right direction, i.e., the cup body 20 is inserted into the housing cavity 31 along the width direction of the cup body 20, or the cup body 20 is taken out from the housing cavity 31 along the width direction of the cup body 20 to be separated from the cup holder 30. A width of the top wall 311 is less than a width of the side wall 313, the side wall 313 is provided with a step 314 that is flush with an edge of the opening 21, and a part of the cup cover 50 covers the step 314, so that a size of an opening part of the opening 21 may be increased, i.e., an area, sheltered by the top wall 311, of the opening 21 is smaller, thereby making it easier to add liquid.

The opening 21 is constructed as a square, a first shaft sleeve 211 extending upwards is disposed on a corner portion of the opening 21, a second shaft sleeve 52 extending downwards is disposed on a corner portion of the cup cover 50, and the first shaft sleeve 211 is connected to the second shaft sleeve 52 by means of an embedded manner, so as to pivot the cup cover 50 relative to the cup body 20. A structure for achieving a pivoting connection between the cup cover 50 and the cup body 20 is set by means of the embedded manner, so that the rotation of the cup cover 50 is more reliable, and disassembly of the cup cover 50 and the cup body 20 is convenient. Moreover, the first shaft sleeve 211 is integrally formed with the cup body 20, and the second shaft sleeve 52 is integrally formed with the cup cover 50, thereby making it convenient to product and have a lower cost. In this embodiment, in particular, through inserting the second shaft sleeve 52 into the first shaft sleeve 211, the cup body 20 is connected to the cup cover 50 by means of a pivoting connection, which facilitates a connection and disassembly of the cup body 20 and the cup cover 50.

Further, a bumping 54 is disposed on a side, joined to top wall 311, of the cup cover 50, the bumping 54 extends into the accommodating cavity 22 and is in interference fit with the top wall 311, so that the cup cover 50 may be more stable when the cup cover 50 is in a closed state, so as to prevent health hazards caused by vibration or accidental opening. The cup cover 50 includes a first corner portion provided with the pivot shaft and a second corner portion opposite to the first corner portion, the cup cover 50 protrudes outwards at a lower edge to form a handle 55, the handle 55 and the bumping 54 are disposed on two sides forming the second corner portion, respectively, and a distance from the handle 55 to the second corner portion is greater than a distance from the bumping 54 to the second corner portion, so that when the cup cover 50 is opened or closed, users' operation is more labor-saving.

In addition, the Venturi structure 40 includes a complete Venturi pipeline, an axial direction of the steam channel 42 is disposed along the front-back direction, the steam channel 42 is connected to a steam connector 61, and the steam connector 61 may extend into a main body of the liquid mixing device 100 and is connected to a steam output pipeline. A position, relative to the steam channel 42, of the steam connector 61 is selectively locked along the axial direction of the steam channel 42, thus making a connection between the steam connector 61 and the steam channel 42 more reliable. The steam connector 61 includes a steam nozzle 611 and a connector pipe 612 that are detachably connected, the steam nozzle 611 is located inside the steam channel 42, a part of the connector pipe 612 is located inside the steam channel 42 and is connected to the steam nozzle 611, and another part of the connector pipe 612 is located outside the steam channel 42 and is used for connecting to the steam source. A position, relative to the steam channel 42, of the connector pipe 612 is selectively locked along the axial direction of the steam channel. The steam connector is set to a type with two sections that are detachable, so as to facilitate a deeper cleaning of the steam connector; locking and releasing of the steam pipeline are achieved through the connector pipe, so that the steam connector is easily mounted and is more reliable to use; and when the mixing device is mounted on a beverage making machine, a position of the steam connector 61 is fixed, so that mounting is more rapid and accurate.

In this embodiment, the steam nozzle 611 is connected to the connector pipe 612 through a screw thread, a part of the steam nozzle 611 is inserted into the connector pipe 612 to be screwed with the connector pipe 612 through the screw thread, a sealing ring may be disposed between the steam nozzle 611 and the connector pipe 612, and sealing between the steam nozzle 611 and the connector pipe 612 is also achieved while the steam nozzle 611 is connected to the connector pipe 612. A sealing ring may also be mounted on an outer periphery of the steam nozzle 611 for the sealing between the steam nozzle 611 and the steam channel 44. A portion, connected to a steam output pipeline, of the connector pipe 612 is also mounted with a sealing ring for the sealing between the connector pipe 612 and the steam output pipeline. The connector pipe 612 rotates around an axis of the steam channel 44, so as to be locked to or released from the steam channel 44. When the steam connector 61 is mounted or disassembled, the steam connector 61 may be locked to or released from the steam pipeline 44 along an axial direction only by rotating the connector pipe 612, so that operation is simple, and users are more convenient to clean and disassemble.

An axial direction of the steam channel 42 is disposed along the front-back direction, a steam outlet 615 is disposed on an end, facing the mixing cavity 41, of the steam nozzle 611, a steam inlet 617 is disposed on an end, connected to the steam source, of the connector pipe 612, and an inflow direction of the steam outlet 615 is disposed at a preset angle with an outflow direction of the steam inlet 617, so that steam entering the steam connector 61 needs to change its direction before entering the mixing cavity 41, so as to prevent an excessive steam pressure from affecting a foaming effect of milk. Preferably, an outflow direction of the steam outlet 615 is disposed at 90 degrees with an inflow direction of the steam inlet 617, and the inflow direction of the steam inlet 617 is upward, i.e., an opening of the steam inlet 617 is disposed downwards, which not only avoids resulting in safety hazards caused by steam spraying upwards when the mixing device 100 is accidentally pulled out, but also prevents foreign matters from entering the steam inlet 617 when the mixing device is placed separately.

Referring to FIG. 8 to FIG. 10, the connector pipe 612 is provided with a bump 613 on an outside, the steam channel 44 is provided with a guiding groove 443 that cooperates with the bump 613, and the guiding groove 443 includes a guiding portion 4431 and an end holding portion 4432. The guiding portion 4431 extends along circumferential and axial directions from an edge of an end of the steam channel, an extending direction of the end holding portion 4432 is perpendicular to an axial direction of the steam channel 44, and the connector pipe 612 rotates by means of movement of the bump 613 in the guiding groove 443. Disposal of the guiding groove 443 not only guides the mounting of the steam connector 61, but also locks a position of the steam connector 61 in the steam channel 44, which is simple in structure, thereby making it more convenient to operate.

The mixing device 100 further includes an end cover 90, the Venturi structure 40 is integrally formed with the cup holder 30 and protrudes towards a side away from the cup body 20, the cup holder 30 is provided with an enclosure wall 47 enclosing the Venturi structure 40, and the end cover 90 covers the enclosure wall 47, so that the Venturi structure is blocked by the end cover 90 at a side away from the cup body 20. The end cover 90 covers the enclosure wall 47, so that the end cover 90 may seal the Venturi structure 40 together with the enclosure wall 47, thereby improving aesthetics of appearance of the mixing device. The guiding groove 443 penetrates through a peripheral wall of the steam channel 44 along a direction of the Venturi structure 40 towards a side where the cup body 20 is located, and a position where the guiding groove 443 is located is blocked by the cup body 20. After the cup body 20 is detached from the cup holder 30, the guiding groove 443 may be exposed from a side of the cup holder 30, so that the mounting of the bump 613 in the guiding groove 443 may be clearly seen, so as to provide convenience to users when the steam connector 61 is mounted and the steam connector 61 is disassembled. In addition, the guiding groove 443 may also be connected to an edge of an end, along an axial direction, of the steam channel 44, so that when the steam connector 61 is mounted, it is easier to correspond the bump 613 with the guiding groove 443, thereby achieving accurate mounting.

An opening end of the steam channel 44 is flush with a side wall of the enclosure wall, and the side wall is provided with a trigger column 445 for triggering a micro switch on a beverage making machine, so as to enable the beverage making machine to detect whether the mixing device is mounted in place. The trigger column 445 is disposed in a region where a projection of the trigger column 445 overlaps with a projection of the connector pipe 612 along an up-down direction. In other words, a position of the trigger column 445 does not exceed an outer contour, along the left-right direction, of the connector pipe 612, and the connector pipe 612 indirectly protects the trigger column 445, so as to prolong a service life of the mixing device. Moreover, the trigger column 445 is disposed adjacent to the steam connector 61, which also facilitates the cooperation between the liquid mixing device and the beverage making machine.

In order to facilitate disassembly and mounting of the end cover 90, the end cover 90 may be correspondingly provided with a magnetic member, the cup holder 30 may be correspondingly provided with a magnetic member, the two magnetic members cooperate with each other, and the end cover 90 is connected to the cup holder 30 by means of a magnetic suction manner. In this embodiment, two first magnetic suction members 91 are disposed on the end cover 90, two second magnetic suction members 39 are disposed on the cup holder 30, the two first magnetic suction members 91 on the end cover 90 may be disposed at approximately diagonal positions, respectively, and correspondingly, the two second magnetic suction members 39 on the cup holder 30 may also be disposed at approximately diagonal positions within the enclosure wall 47, respectively, such as in a gap between the enclosure wall 47 and the Venturi structure 40. Disposal of a magnetic suction structure may make the disassembly and mounting of the end cover 90 more convenient and make the end cover 90 have a longer service life.

Further, the outlet channel 44 is connected to the discharging pipe 71, and the discharging pipe 71 can rotate within a preset range around an axis of the outlet channel 44, so as to adjust an output position. A sealing member 80 is connected between the discharging pipe and the outlet channel, a bubble breaker 75 is disposed in the discharging pipe, the bubble breaker 75 is located on a flow path from the sealing member 80 to the discharging pipe 71, and the discharging pipe 71 is connected to the outlet channel 44 through the sealing member 80. Disposal of the bubble breaker may make output milk foam more delicate, so as to improve quality of the milk foam, so that mouthfeel of the made beverage is improved, thereby meeting requirements of users.

Along a discharging direction of liquid, the discharging pipe 71 includes a first portion 711 and a second portion 712 that are bent at a preset angle, an inner of the first portion 711 is connected to an inner of the second portion 712, the first portion 711 is connected to the outlet channel 44 through the sealing member 80, and a length of the second portion 712 is greater than a length of the first portion 711, thereby making it convenient to correspond the discharging pipe 71 with a target receiving position when the discharging pipe 71 rotates. An extending direction of the first portion 711 may remain in a same extending direction as the Venturi structure 40, and the preset angle between the second portion 712 and the first portion 711 may be set according to a desired outlet direction of milk or milk foam, and preferably, the preset angle is set to 90 degrees. The discharging pipe 71 is directly connected to the sealing member 80 through the first portion 712, thereby making it convenient to use deformation of the sealing member 80 to rotate the discharging pipe 71. The sealing member 80 may also be connected to the outlet channel 44, and a sealing between the outlet channel 44 and the discharging pipe 71 and a connection between the discharging pipe 71 and the outlet channel 44 are achieved through the sealing member 80, which is simple in structure, thereby making it more convenient to mount. Specifically, the Venturi structure 40 includes an end pipe 401 forming at least a part of the outlet channel 44, an end of the sealing member 80 is sleeved on an outer periphery of the end pipe 401, and another end of the sealing member 80 is inserted into the discharging pipe 71, so that more reliable sealing may be achieved.

The second portion 712 of the discharging pipe 71 is provided with a guiding rib 713 on an inner wall for guiding outflow of milk foam, the guiding rib 713 extends along a length direction of the second portion 712, and the milk foam flowing out may also be broken by the guiding rib 713, so that the milk foam finally flowing out is more delicate. The second portion 712 of the discharging pipe 71 may also be sleeved with a decorative pipe 72 on an exterior, such as a metal pipe or a pipe with metallic luster, so that a milk box assembly is more textured and more beautiful.

Referring to FIG. 11, the bubble breaker 75 and the discharging pipe 71 are integrally formed, an annular groove 715 is disposed between the bubble breaker 75 and the discharging pipe 71, and another end of the sealing member 80 is inserted into the annular groove 715, which ensures the sealing while guiding mixed liquid to the bubble breaker 75, so as to improve quality of milk foam. The bubble breaker 75 specifically includes a generally cylindrical stop block 751 located in the first portion 711 of the discharging pipe 71, the stop block 751 is connected to an inner wall of the discharging pipe 71 through a plurality of ribs 752, a through opening 753 is disposed between the plurality of ribs 752, the mixed liquid flows out through the through opening 753, and then is blocked by the stop block 751 and the plurality of ribs 752, so that the discharged milk foam is more delicate. Moreover, the bubble breaker 75 and the discharging pipe 71 are integrally formed, so as to prevent the bubble breaker 75 from falling off and losing when the discharging pipe 71 is disassembled and cleaned.

In addition, in order to further improve the quality of the discharged milk foam, a necking channel 81 is disposed between two ends of the sealing member 80, and an aperture of the necking channel 81 is less than an aperture of the outlet channel 44. Disposal of the necking channel 81 may further improve the quality of the milk foam, which forms a dual guarantee with the bubble breaker 75, thereby making the milk foam more delicate. The end pipe 401 of the Venturi structure 40 may abut against an outer end face of the necking channel 81, so as to limit the mounting of the sealing member 80 on the end pipe 401. In addition, the sealing member 80 is provided with a concave-convex structure, the end pipe 401 is provided with a concave-convex structure, and the two concave-convex structures are matched in shape, which facilitates a connection and sealing between the sealing member 80 and the end pipe 401.

In this embodiment, a portion, connected to the outlet channel 44, of the sealing member 80 and a portion, connected to the discharging pipe 71, of the sealing member 80 are separated by a portion, provided with the necking channel 81, of the sealing member 80, and a position where the sealing member 80 is mounted on the enclosure wall 47 corresponds to a position of the necking channel 81, which facilitates the mounting and positioning of the sealing member 80, thereby making the sealing more reliable. Preferably, the sealing member 80 is provided with a protruding ring 83 on an outer periphery, and the protruding ring 83 is clamped to a side of the enclosure wall 47, so as to position the mounting of the sealing member 80, thereby making it more convenient to mount and disassemble the sealing member 80. The end cover 90 covers the enclosure wall 47, and the sealing member 80 is limited between the enclosure wall 47 and the end cover 90, which facilitates the mounting and disassembly of the sealing member 80, and makes the fixing of the sealing member 80 more reliable. In this embodiment, a semi-circular concave portion may be disposed on the enclosure wall 47, a semi-circular concave portion may be disposed on the end cover 90, and when the end cover 90 is connected to the enclosure wall 47, the sealing member 80 may be sandwiched between the two concave portions.

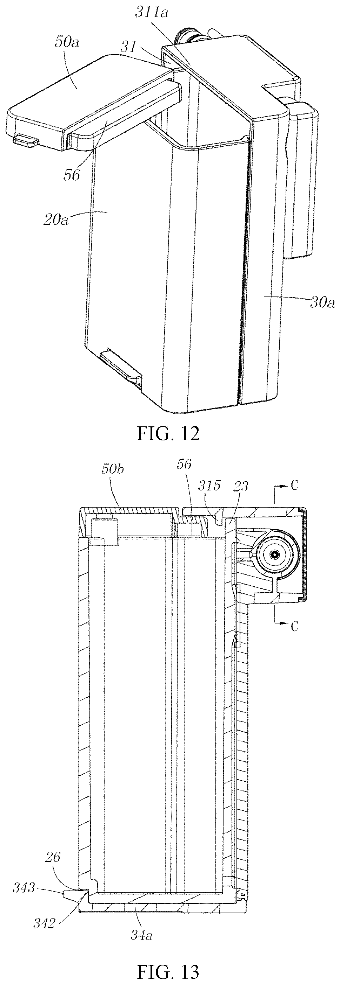

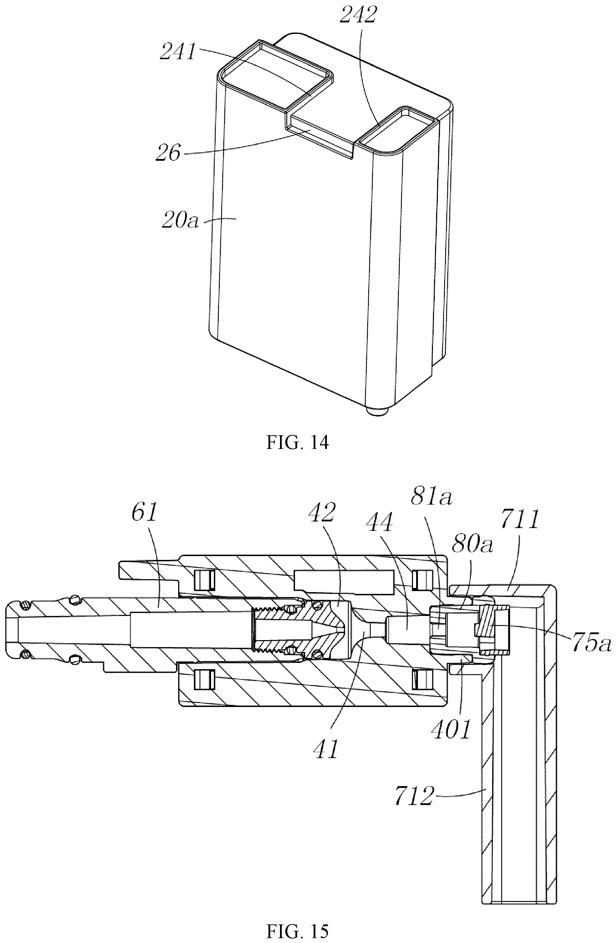

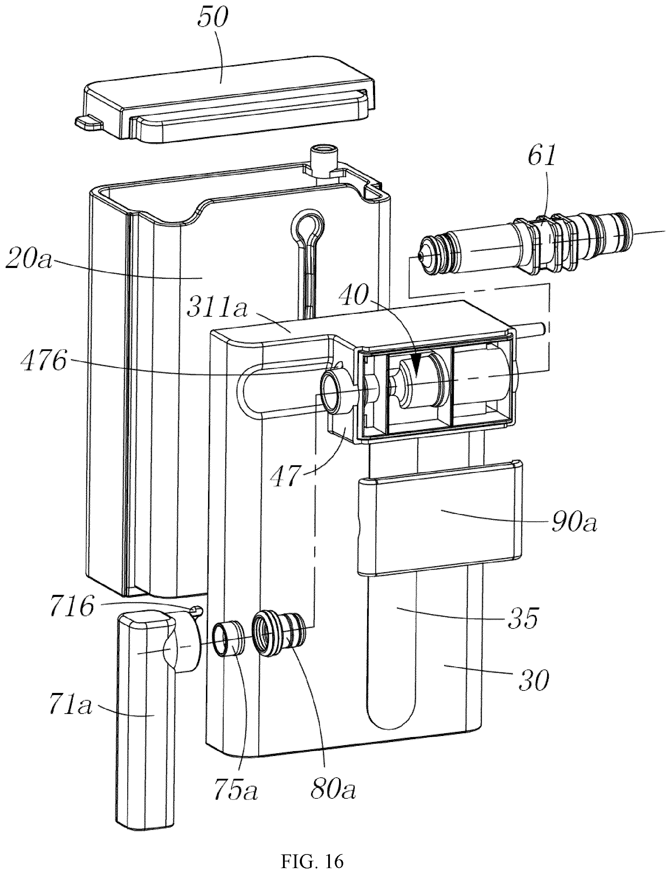

Referring to FIG. 12 to FIG. 16, in another embodiment of the present disclosure, components with the same reference numbers as those in the above embodiments are also similar in structure and function, and details are not described herein again. A first limiting portion also includes a limiting rib 315 protruding downwards from a middle of a top wall 311a, a protruding edge 23 extending upwards is disposed on a side wall, close to a cup holder 30a, of a cup body 20a, and the protruding edge 23 is clamped to a side of the limiting rib 315. A second limiting portion includes a supporting plate 34a extending from a middle of a bottom wall 312 to a side where the cup body 20a is located, a position clamping block 342 extending upwards is disposed on an end of the supporting plate 34a, a recess 26 is disposed at a bottom of a side wall of the cup body 20a, and the position clamping block 342 is stuck in the recess 26. Similarly, dual limiting at both upper and lower sides is adopted, so that the cup holder 30a limits the cup body 20a along the left-right direction of the cup body 20a, and two side walls of the cup holder 30a limit the cup body 20a along the front-back direction, so as to more reliably support the cup body 20a on the cup holder 30a, and the separation of the cup body 20a and the cup holder 30a may be achieved only by operating the second limiting portion, thereby making mounting and disassembly between the cup body 20a and the cup holder 30a very convenient.

In addition, the position clamping block 342 is provided with a protrusion portion 343 protruding outwards along a width direction of the cup body 20a. The protrusion portion 343 is disposed, so that the supporting plate 34a may be conveniently operated to disengage the position clamping block 342 from the recess 26 through elastic deformation of the supporting plate 34a, and in this embodiment, the position clamping block 342 is disengaged from the recess 26 by pressing the protrusion portion 343 downwards, so that the protruding edge 23 may also be separated from the limiting rib 315, thereby separating the cup body 20a from the cup holder 30a. The edges, along a width direction, of the top wall 311a, a bottom wall and two side walls that form a housing cavity 31 are flush. A cup cover 50a is provided with a sinking portion 56 on a side joined to the top wall 311a, and along a vertical direction of the cup body 20a, a size of the sinking portion 56 is less than a size of the cup cover 50a, and along a front-back direction of the cup body 20a, a size of the sinking portion 56 is less than a size of the cup cover 50a. When the cup cover 50a is in a closed state, the sinking portion 56 extends into the housing cavity 31, so that the cup cover 50a is more stable, thereby avoiding opening the cup cover 50a due to vibration or accidents.

Similar to the above embodiments, the protruding edge 23 that cooperates with the first limiting portion is located on the side wall, close to the cup holder 30, of the cup body 20a, i.e., a right side wall, and the recess 26 that cooperates with the second limiting portion is located on a left side wall of the cup body 20a, so that positions where the first limiting portion and the second limiting portion cooperate with the cup body 20a are spaced along the width direction of the cup body, so as to further enhance stability of the supporting of the cup body 20a on the cup holder 30a.

In addition, the cup body 20a also protrudes at a bottom to form a first boss 241 and a second boss 242 that are spaced apart, and the supporting plate 34a is clamped between the first boss 241 and the second boss 242, so as to further limit the supporting of the cup body 20a on the cup holder 30a, and a part of the cup body 20a may also be supported on the supporting plate 34a, so that the supporting of the cup body 20a on the cup holder 30a is more stable.

A sealing member 80a is connected between a discharging pipe 71a and an outlet channel 44, a bubble breaker 75a is disposed in the discharging pipe 71a, and the bubble breaker 75a is located on a flow path from the sealing member 80a to the discharging pipe 71a. A difference is that the bubble breaker 75a and the discharging pipe 71a are disposed separately, and a structure of the bubble breaker 75a is similar to that of the above embodiments. In this embodiment, the bubble breaker 75a is connected to the sealing member 80a, the sealing member 80a is provided with a necking channel 81a, the necking channel 81a is disposed on an end, facing the outlet channel 44, of the sealing member 80a, and the bubble breaker 75a is connected to another end of the sealing member 80a. A Venturi structure 40 includes an end pipe 401 forming at least a part of the outlet channel 44, an end of the sealing member 80a is inserted into the end pipe 401, and another end of the sealing member 80a and the end pipe 401 are inserted into the discharging pipe 71a.

A first portion 711 of the discharging pipe 71a protrudes at an end portion to form a hook portion 716, the end pipe 401 extends outwards relative to an enclosure wall 47, a clamping groove 476 is disposed on a position, close to the end pipe 401, on the enclosure wall 47, and the hook portion 716 can extend into the clamping groove 476 and is locked relative to the cup holder 30 along an extension direction of the outlet channel 44. The clamping groove 476 may be provided with a clamping groove wall with different widths, and the discharging pipe 71a rotates to drive the hook portion 716 to move in the clamping groove 476. In a locked state, the hook portion 716 is blocked by the clamping groove wall, so as to limit the hook portion separating from the clamping groove 476, and in a released state, the hook portion 716 is allowed to separate from the clamping groove 476, so that the discharging pipe 71a may be disassembled. The sealing member 80a may be provided with two parts with different outer diameters, a part with a smaller outer diameter extends into the outlet channel 44, and a step portion between the two parts may limit the mounting of the sealing member 80a. A part with a larger outer diameter extends into the discharging pipe 71a, thereby achieving the sealing between the outlet channel 44 and the discharging pipe 71a.

The end cover 90a protrudes at a surface facing the enclosure wall 47 to form a plurality of hooks, clamped grooves matched with the hooks are disposed in the enclosure wall 47, and through inserting the clamped grooves into the hooks, the end cover 90a is connected to the cup holder 30 by means of a clamping manner.

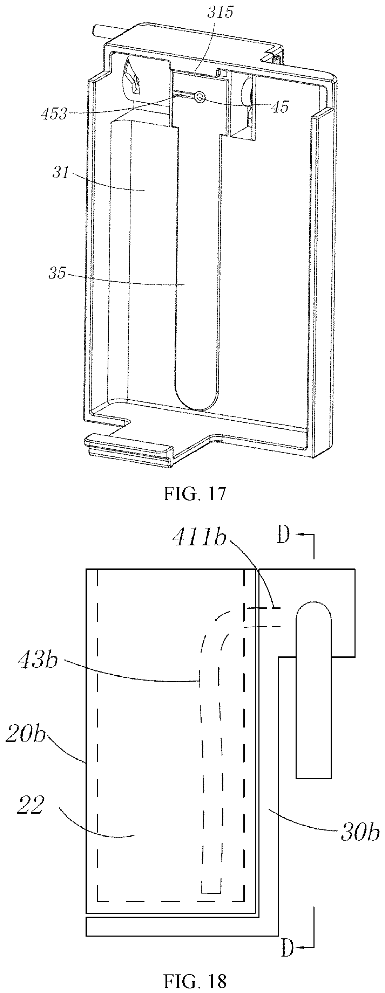

Referring to FIG. 17, in order to provide another structural form of an air channel, an air inlet groove 453 connected to a liquid inlet 45 may be disposed on a sealing strip, so that liquid and air may enter a mixing cavity together through the liquid inlet 45.

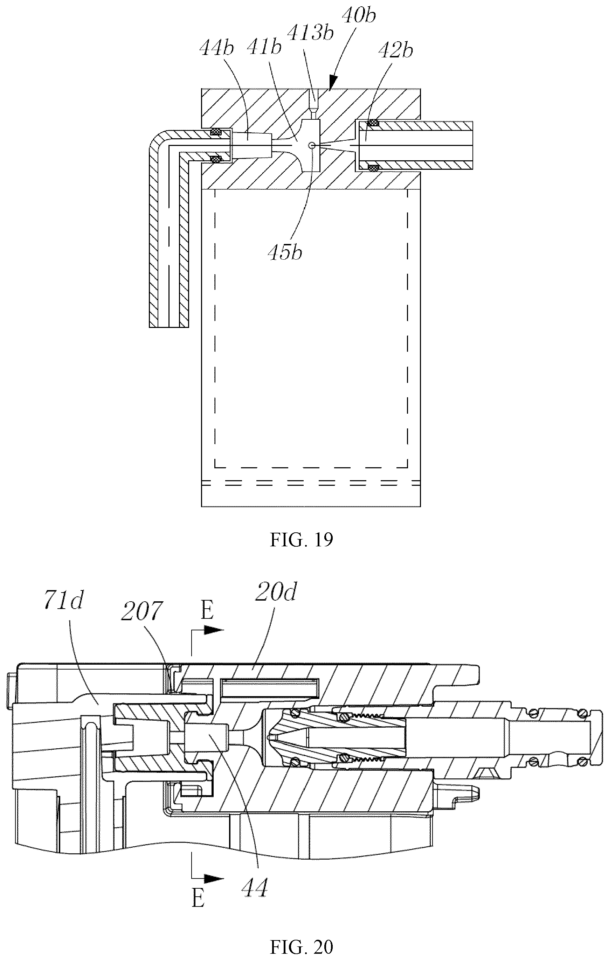

Referring to FIG. 18 and FIG. 19, in still another embodiment of the present disclosure, a liquid conveying pipeline 43b is constructed as a hose extending into a cup body 20b, and the hose may be detachably connected to a liquid inlet 45b, so as to facilitate disassembly during cleaning. A Venturi structure 40b is integrally formed with a cup holder 30b and is located on a side of the cup body, a steam channel 42b and an outlet channel 44b are horizontally disposed, the steam channel 42b is connected to an end of a mixing cavity 41b, and the outlet channel 44b is connected to another end of the mixing cavity 41b. A liquid inlet channel 411b extends from the mixing cavity 41b, and an extending direction of the liquid inlet channel 411b is perpendicular to an extending direction of the steam channel 42b or the outlet channel 44b. The liquid inlet channel 411v is provided with the liquid inlet 45b facing a side where the cup holder is located, the liquid inlet 45b is connected to the liquid conveying pipeline 43b, the liquid conveying pipeline 43b is constructed as the hose, and the hose extends into an accommodating cavity 22 from a side of the cup body 20b.

In addition, an air channel 413b connected to the mixing cavity 41b may be further disposed on the cup holder, the air channel 413b may be connected to the mixing cavity 41b along a vertical direction, and an opening of the air channel 413b may be disposed upwards. In this embodiment, a Venturi structure 40b is also an independent and complete structure, and is also a structure formed by seamlessly joining the mixing cavity 41b, the steam channel 42b connected to the mixing cavity 41b, the liquid inlet channel 411b and the outlet channel 44b, and the Venturi structure 40b is integrally formed with the cup holder, so that a number of parts may be reduced, thereby making disassembly and mounting convenient, and when the Venturi structure is cleaned, the cup holder may be held to clean the Venturi structure, so that an user experience is good.

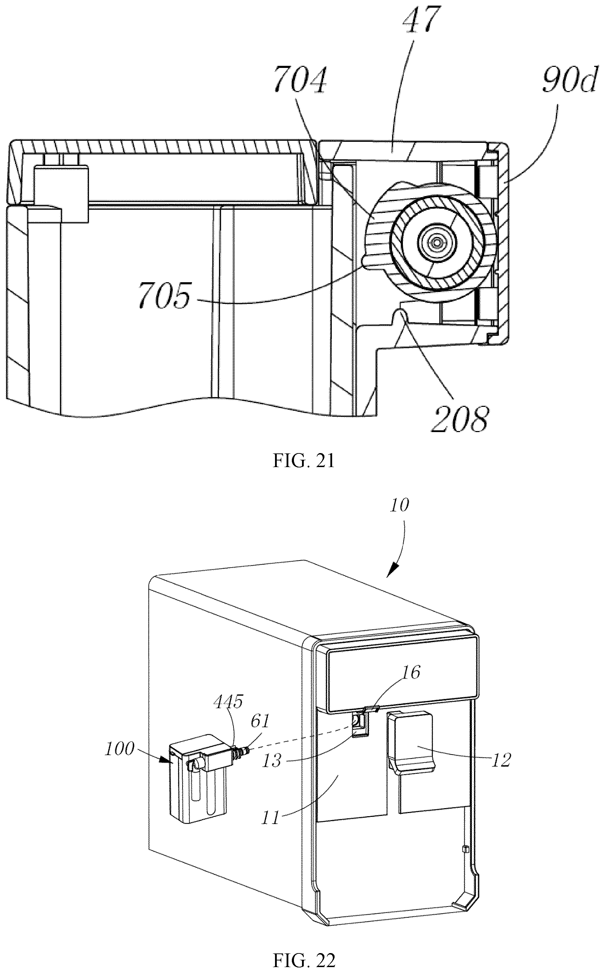

Referring to FIG. 20 and FIG. 21, in yet still another embodiment of the present disclosure, in addition to structures of a connection portion between a discharging pipe and a cup body of the mixing device, other structures are the same as those in the above embodiments, and details are not described herein again. In this embodiment, a discharging pipe 71d is connected to an outlet channel 44, a cup body 20d is provided with a connecting opening 207 at a position corresponding to the outlet channel 44, and a part of the discharging pipe 71d extends into an inner side of the connecting opening 207. A first protrusion 704 extending along a circumferential direction is disposed on an outer side of the discharging pipe 71d, and the first protrusion 704 is clamped to the inner side of the connecting opening 207, which may limit the discharging pipe 71d to separating from the cup body 20d along an axial direction of the outlet channel 44 within a certain angle range, thereby preventing the discharging pipe 71d from being accidentally pulled out when a dairy product is being made, thus ensuring that users are safer to use. A side of the cup body 20d is detachably connected to an end cover 90d, an enclosure wall 47 surrounding a Venturi structure is disposed on a side of the cup body 20d, the end cover 90d covers the enclosure wall 47, a part of the connecting opening 207 is disposed on the enclosure wall 47, another part of the connecting opening 207 may be disposed on the end cover 90d, and the discharging pipe 71d rotates to a point where the first protrusion 704 is located on a side of the end cover 90d, so that the discharging pipe 71d may be separated from the cup body 20d along the axial direction of the outlet channel 44.

Further, a second protrusion 208 is disposed on the inner side of the connecting opening 207, a protruding portion 705 is disposed on an end, along a circumferential direction, of the first protrusion 704, and when the discharging pipe 71d rotates around an axis of the outlet channel 44 to a preset range, the protruding portion 705 abuts against the second protrusion 208, so as to limit the discharging pipe 71d to continuing to rotate, thereby preventing an outlet from spraying towards users during the making of hot milk foam, further ensuring that users are safe to use. In particular, a rotation angle of the discharging pipe 71d may be limited within a range of 0 to 45 degrees, thereby ensuring safe use.

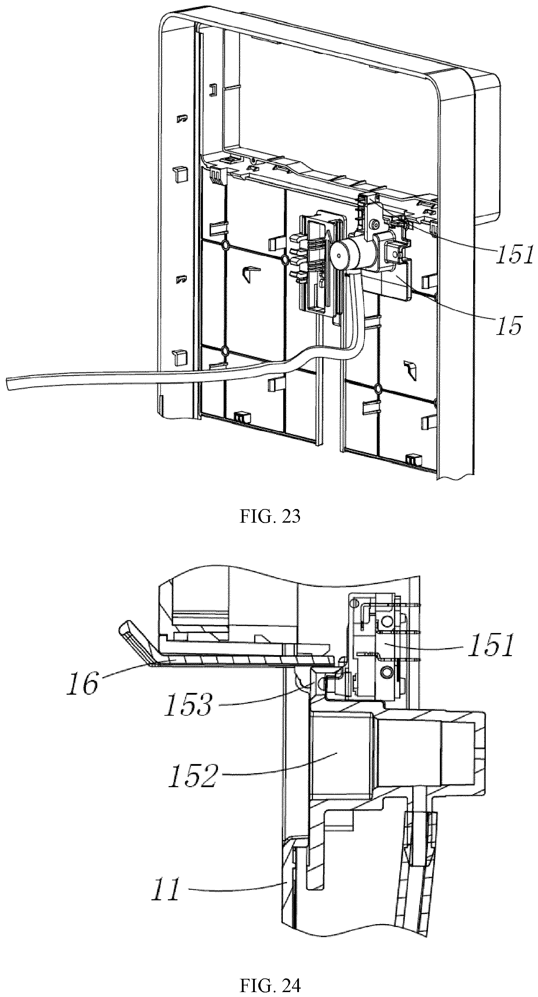

Referring to FIG. 22 to FIG. 24, the present disclosure further provides a beverage making machine 10, such as a coffee machine, including the liquid mixing device 100 in the above embodiments, the beverage making machine 10 includes a front panel 11 connected to an outlet assembly, and the liquid mixing device 100 is detachably connected to the front panel 11 and is located on a side of the outlet assembly 12. The front panel 11 is provided with a mounting groove 13, and the liquid mixing device 100 may be connected to a steam output pipeline inside the beverage making machine 10 by inserting the steam connector 61 into the mounting groove 13. The discharging pipe 71 rotates until the discharging pipe 71 is adjusted to align with a cup below the outlet assembly 12, so that the making of milk-coffee may be achieved.

The beverage making machine 10 includes a connector seat 15 connected to a back side of the front panel 11 and a micro switch 151 mounted on the connector seat 15. The connector seat 15 is provided with a concave cavity 152 whose shape matches with a shape of the steam connector and a socket 153 corresponding to the micro switch 151. The steam connector 61 of the liquid mixing device 100 and a trigger column 445 disposed adjacent to the steam connector 61 are inserted into the concave cavity 152 and the socket 153, respectively, so that a connection of steam pipelines between the liquid mixing device 100 and the beverage making machine and a detection of the mounting of the liquid mixing device 100 in place are achieved simultaneously. The connector seat 15 is connected to a flip cover 16 by means of a pivoting connection, and the flip cover 16 may be operated to open the concave cavity 152 and the socket 153, so as to facilitate the mounting of the liquid mixing device 100. When the liquid mixing device 100 is removed, the flip cover 16 is kept at a position covered the concave cavity 152 and the socket 153 under its own gravity, so as to prevent external foreign matters from entering the beverage making machine while preventing steam in the beverage making machine from accidentally overflowing, so that users are safer to use.

The liquid mixing device above described is not limited to applications in a coffee machine, and may also be used in other beverage brewing devices, such as a tea drinker or other devices for brewing beverages.

In the above embodiments, the complete Venturi structure is integrated with the cup holder, so that a number of parts is reduced, which not only solves a problem in that a traditional liquid mixing device is not easily cleaned and ensures quality of the made milk foam, thereby meeting requirements of people for pursuing delicate mouthfeel and improving taste, but also makes mounting and disassembly more convenient, thereby providing great convenience to users.

It should be understood that although this specification is described according to the embodiments, but not every embodiment only includes one independent technical solution, this description of the specification is merely for the purposes of clarity, a person skilled in the art should take the specification as a whole, and the technical solutions in the embodiments may also be appropriately combined, to form other embodiments that may be understood by a person skilled in the art.

The series of detailed descriptions listed above are merely specific descriptions of the feasibility embodiments of the present disclosure, and are not intended to limit the protection scope of the present disclosure, and equivalent embodiments or changes that do not depart from the technical spirit of the present disclosure shall fall within the protection scope of the present disclosure.

## Claims

1. A liquid mixing device, wherein the liquid mixing device comprises:
a cup body provided with an accommodating cavity for holding liquid;
a cup holder, the cup body being detachably supported on the cup holder; and
a Venturi structure integrally formed with the cup holder and located on a side of the cup body, the Venturi structure comprising a mixing cavity, a liquid inlet channel connected to the mixing cavity, a steam channel for connecting a steam source and an outlet channel for outputting, the steam channel and the outlet channel being connected to the mixing cavity, the liquid inlet channel being connected to the accommodating cavity through a liquid conveying pipeline, and the liquid inlet channel being connected to the liquid conveying pipeline at an angle.

2. The liquid mixing device according to claim 1, wherein the liquid inlet channel is inserted into the liquid conveying pipeline along a horizontal direction, and the steam channel and the outlet channel are disposed along the horizontal direction and are perpendicular to an extending direction of the liquid inlet channel.

3. The liquid mixing device according to claim 1, wherein the liquid inlet channel is provided with a liquid inlet facing a side where the cup holder is located, the liquid inlet is connected to the liquid conveying pipeline, an opening channel extending along a vertical direction is disposed on an outer side of the cup body, the cup holder is provided with a sealing strip extending along the vertical direction, and the liquid conveying pipeline is formed by sealing the sealing strip to the opening channel.

4. The liquid mixing device according to claim 3, wherein the cup holder comprises a back plate, the sealing strip is connected to the back plate, the back plate is provided with a first opening portion and a second opening portion on an upper end, the first opening portion and the second opening portion are spaced along a horizontal direction, the steam channel and the outlet channel correspond to a position of the first opening portion and a position of the second opening portion, respectively, positions of the mixing cavity and the liquid inlet channel are located between the first opening portion and the second opening portion, a groove enclosing an opening end of the liquid inlet channel is disposed between the first opening portion and the second opening portion, and the groove is filled with the sealing strip.

5. The liquid mixing device according to claim 3, further comprising an air groove connected to the liquid inlet channel, wherein the air groove is disposed on the opening channel or the sealing strip.

6. The liquid mixing device according to claim 1, wherein the liquid inlet channel is provided with a liquid inlet facing a side where the cup holder is located, the liquid inlet is connected to the liquid conveying pipeline, the liquid conveying pipeline is constructed as a hose, and the hose extends into the accommodating cavity from a side of the cup body.

7. The liquid mixing device according to claim 1, wherein the accommodating cavity is provided with an opening on an upper part, the liquid mixing device further comprises a cup cover movably covered the opening, a housing cavity is disposed on a side of the cup holder, a part of the cup body is located in the housing cavity, the housing cavity is enclosed by a top wall, a bottom wall and two side walls connecting the top wall and the bottom wall, and the cup cover is joined to the top wall, so as to jointly seal the opening.

8. The liquid mixing device according to claim 1, further comprising a steam connector capable of connecting to the steam channel, wherein a position, relative to the steam channel, of the steam connector is selectively locked along an axial direction of the steam channel.

9. The liquid mixing device according to claim 8, wherein the steam connector comprises a steam nozzle and a connector pipe that are detachably connected, the steam nozzle is located inside the steam channel, a part of the connector pipe is located inside the steam channel and is connected to the steam nozzle, and another part of the connector pipe is located outside the steam channel and is used for connecting to the steam source.

10. The liquid mixing device according to claim 1, further comprising a discharging pipe, connected to the outlet channel and capable of rotating within a preset range around an axis of the outlet channel, wherein a sealing member is connected between the discharging pipe and the outlet channel.

11. The liquid mixing device according to claim 10, wherein a bubble breaker is disposed in the discharging pipe, and the bubble breaker is located on a flow path from the sealing member to the discharging pipe.

12. The liquid mixing device according to claim 10, further comprising an end cover, wherein the cup body is supported on a side of the cup holder, the Venturi structure is disposed on another side of the cup holder, the cup body is provided with an enclosure wall enclosing the Venturi structure, the end cover covers a cup wall, and the sealing member is limited between the enclosure wall and the end cover.

13. The liquid mixing device according to claim 1, wherein the cup holder is provided with a first limiting portion and a second limiting portion that are spaced along an up-down direction, an upper portion and a lower portion of the cup body cooperate with the first limiting portion and the second limiting portion, respectively, the first limiting portion and the second limiting portion are configured to limit the cup body to separating from the cup holder along a first direction, and a position, relative to the cup body, of the second limiting portion changes under an external force, so as to allow the cup body to separate from the cup holder

14. The liquid mixing device according to claim 13, wherein a housing cavity is disposed on a side of the cup holder, a part of the cup body is located in the housing cavity, the housing cavity is enclosed by a top wall, a bottom wall and two side walls connecting the top wall and the bottom wall, the first limiting portion comprises a limiting rib protruding downwards from a middle of the top wall, a protruding edge extending upwards is disposed on a side wall of the cup body, and the protruding edge is clamped to a side of the limiting rib.

15. The liquid mixing device according to claim 13, wherein a housing cavity is disposed on a side of the cup holder, a part of the cup body is located in the housing cavity, the housing cavity is enclosed by a top wall, a bottom wall and two side walls connecting the top wall and the bottom wall, and the second limiting portion extends from the bottom wall towards a side where the cup body is located,
wherein the second limiting portion comprises a supporting plate extending from a middle of the bottom wall to a side where the cup body is located, the supporting plate is provided with a slot, the cup body is provided with a clamping block at a bottom, and the clamping block is inserted into the slot; or
the second limiting portion comprises a supporting plate extending from a middle of the bottom wall to a side where the cup body is located, a position clamping block extending upwards is disposed on an end of the supporting plate, a recess is disposed at a bottom of a side wall of the cup body, and the position clamping block is stuck in the recess.

16. The liquid mixing device according to claim 13, wherein the cup body protrudes at a bottom to form a first boss and a second boss that are spaced apart, and the supporting plate is clamped between the first boss and the second boss; and positions where the first limiting portion and the second limiting portion cooperate with the cup body are spaced along a first direction.

17. The liquid mixing device according to claim 1, further comprising a discharging pipe connected to the outlet channel, wherein the cup body is provided with a connecting opening at a position corresponding to the outlet channel, a part of the discharging pipe extends into an inner side of the connecting opening, a first protrusion extending along a circumferential direction is disposed on an outer side of the discharging pipe, and the first protrusion is clamped to the inner side of the connecting opening; and the connecting opening is provided with a second protrusion on the inner side, a protruding portion is disposed on an end, along the circumferential direction, of the first protrusion, and when the discharging pipe rotates around an axis of the outlet channel to a preset angle, the protruding portion abuts against the second protrusion.

18. A beverage making machine, comprising the liquid mixing device according to any one of claims 1 to 17, wherein the beverage making machine comprises a front panel connected to an outlet assembly, and the liquid mixing device is detachably connected to the front panel and is located on a side of the outlet assembly.

19. The beverage making machine according to claim 18, further comprising a connector seat connected to a back side of the front panel and a micro switch mounted on the connector seat, wherein the liquid mixing device further comprises a steam connector connected to the steam channel, the connector seat is provided with a concave cavity whose shape matches with a shape of the steam connector and a socket corresponding to the micro switch, the liquid mixing device comprises a trigger column disposed adjacent to the steam connector, and the steam connector and the trigger column are inserted into the concave cavity and the socket, respectively.
